# EUROPÄISCHE PATENTSCHRIFT

(11) **EP 2 283 938 B1**
(45) Veröffentlichungstag und Bekanntmachung des Hinweises auf die Patenterteilung: **28.08.2013**
(21) Anmeldenummer: 10008167.8
(22) Anmeldetag: 05.08.2010
(51) Int. Cl.: E03F 7/10, E03F 9/00, F04B 17/05, F16H 7/08, F16H 9/04, B08B 9/049

(54) **Vorrichtung zur Kanalreinigung**
Device for cleaning sewers
Dispositif de nettoyage de canal

(30) Priorität: 06.08.2009 DE 102009036317; 11.03.2010 DE 102010010940
(43) Veröffentlichungstag der Anmeldung: 16.02.2011
(73) Patentinhaber: Wiedemann, Karl, 86465 Welden (DE)
(72) Erfinder: Wiedemann, Karl, 86465 Welden (DE)
(74) Vertreter: Munk, Ludwig

(56) Entgegenhaltungen:
- EP-A1- 0 992 635
- DE-A1- 2 300 279
- DE-A1- 2 929 650
- DE-C1- 3 705 702

## Beschreibung

Die Erfindung betrifft eine Vorrichtung zur Kanalreinigung, insbesondere ein Kanalreinigungsfahrzeug, mit einem internen Antriebsmotor zum Antrieb diverser Aggregate und mit wenigstens einem in den Kanal einführbaren, am vorderen Ende mit einer Kanaldüse bestückten Räumschlauch, der mittels einer Hochdruckpumpe mit Spülwasser versorgbar ist, deren Antriebswelle zur Bewerkstelligung von Spülbetrieb mit dem internen Antriebsmotor kuppelbar ist.

Eine Anordnung dieser Art ist in der DE 29 29 650 A1 beschrieben. Bei dieser bekannten Anordnung ist die Hochdruckpumpe jedoch nur mit einer Geschwindigkeit antreibbar. Die Hochdruckpumpe arbeitet dabei stets mit derselben Förderleistung, die so ausgelegt sein muss, dass für die Spülung größerer Kanäle genügend Spülwasser zur Verfügung steht. Bei der Spülung von Kanälen mit kleinerem Querschnitt ergibt sich dabei jedoch ein Wasserüberschuss. Dabei besteht die Gefahr, dass von dem in den Kanal abgegebenen Wasserstrahl die im Kanal vorhandene Luft mitgerissen wird, so dass ein Unterdruck erzeugt wird, der sich über die in den Kanal einmündenden Hausanschlüsse bis in die angeschlossenen Gebäude ausbreiten kann. Es kann daher vorkommen, dass den gebäudeseitigen Kanalanschlüssen als Geruchssperren zugeordnete Siphone etc. leergesaugt werden, was zum Wegfall der Geruchssperre und in der Folge davon zu einer Geruchsbelästigung führt, was unerwünscht ist.

Es wäre zwar denkbar, zur Reduzierung der Drehzahl der Hochdruckpumpe die Drehzahl des der Hochdruckpumpe zugeordneten Motors zu reduzieren. Dies hätte allerdings zur Folge, dass nicht nur die Drehzahl der Hochdruckpumpe reduziert würde, sondern auch aller weiteren, durch denselben Motor angetriebenen Aggregate, wie zum Beispiel der zum Aufsaugen des durch den Räumschlauch gelockerten Schlamms benötigten Vakuumpumpe etc., was den Saugbetrieb beeinträchtigen würde.

Es wurde auch schon versucht, die effektive, im Kanal ankommende Fördermenge der Hochdruckpumpe dadurch zu begrenzen, dass der Förderstrom der Hochdruckpumpe in zwei Teilströme aufgeteilt wird, von denen einer in den der Hochdruckpumpe zugeordneten Spülwassertank zurückgeführt wird. Hierbei wird jedoch viel Energie vernichtet, was im Hinblick auf die Energiekosten unerwünscht ist.

Es wurde ferner bereits versucht, der Hochdruckpumpe ein hydraulisches Getriebe zuzuordnen, das eine Veränderung der Antriebsgeschwindigkeit der Hochdruckpumpe ermöglicht. Ein hydraulisches Getriebe besitzt erfahrungsgemäß jedoch einen vergleichsweise schlechten Wirkungsgrad, so dass auch hier ebenfalls hohe Energieverluste auftreten, was im Hinblick auf die Energiekosten unerwünscht ist.

Das Dokument EP 0992 635 A1 zeigt eine Saug- und Hochdruckreinigungsvorrichtung, welche von einer Logikeinheit gesteuert wird. Die Saug- und Hochdruckreinigungsvorrichtung weist zumindest einen Sammeltank und einen Reinigungswassertank auf. Mittels einer Vakuumpumpe kann in dem Sammeltank ein Vakuum erzeugt und aufrecht erhalten werden. Mittels einer Hochdruckpumpe kann Wasser unter hohem Druck zum Reinigen geliefert werden. Ein Motor treibt die beiden Pumpen an, wobei die Antriebsgeschwindigkeit der Hochdruckpumpe unabhängig von derjenigen der Vakuumpumpe einstellbar ist. Zusätzlich ist die jeweilige Antriebsgeschwindigkeit von mindestens einer der beiden Pumpen unabhängig von der Drehzahl des Motors einstellbar.

Das Dokument DE 2 300 279 A zeigt einen Schlammsaugewagen, welcher eine Luftpumpe und eine Wasserhochdruckpumpe aufweist. Die Luftpumpe dient zur Erzeugung eines Unterdrucks in einem Schlammsammelbehälter. Die Wasserhochdruckpumpe dient zur Erzeugung eines Wasserdrucks für eine Strahldüse am Anfang eines in einen Kanal eingelassenen Schlauches. Die Luftpumpe und die Wasserhochdruckpumpe werden dabei von einer vom

Fahrzeugmotor gesonderten Verbrennungskraftmaschine angetrieben.

Hiervon ausgehend ist es daher die Aufgabe der vorliegenden Erfindung, unter Vermeidung der obigen Nachteile eine Vorrichtung der eingangs erwähnten Gattung so zu verbessern, dass nicht nur eine einfache Änderung der Fördermenge der Hochdruckpumpe möglich ist, sondern gleichzeitig auch ein energiesparender Betrieb gewährleistet ist.

Diese Aufgabe wird erfindungsgemäß dadurch gelöst, dass fluchtend zur Antriebswelle der Hochdruckpumpe mehrere, jeweils einer Antriebsgeschwindigkeit zugeordnete, frei drehbar gelagerte Antriebsräder unterschiedlichen Durchmessers angeordnet sind, die in ständiger Mitnahmeverbindung mit dem internen Antriebsmotor sind und mittels einer Mehrfach-Kupplungseinrichtung wahlweise mit der Antriebswelle der Hochdruckpumpe kuppelbar sind.

Hiermit werden die Nachteile der bekannten Anordnungen vollständig vermieden. Die vorgeschlagenen Maßnahmen ermöglichen in vorteilhafter Weise einen Betrieb der Hochdruckpumpe mit verschiedenen Geschwindigkeiten bei konstanter Drehzahl des Antriebsmotors. Außerdem ist die Beibehaltung einer mechanischen Drehmomentübertragung sowie einer funkenschlagfreien Kupplung sichergestellt, was eine hohe Sicherheit und einfache Bauweise sowie einen guten Wirkungsgrad gewährleistet und damit nur vergleichsweise geringe Energieverluste verursacht.

Vorteilhafte Ausgestaltungen und zweckmäßige Fortbildungen der übergeordneten Maßnahmen sind in den Unteransprüchen angegeben.

Zweckmäßig ist die Hochdruckpumpe wahlweise mit zwei unterschiedlichen Geschwindigkeiten antreibbar, wobei zwei nebeneinander angeordnete Antriebsräder mit unterschiedlichem Durchmesser genügen. Mit zwei Antriebsgeschwindigkeiten lassen sich die Bedürfnisse der Praxis abdecken. Gleichzeitig ergibt sich dabei eine kompakte Bauweise, was insbesondere bei Kanalreinigungsfahrzeugen sehr erwünscht ist, bei denen die Hochdruckpumpe zwischen den Tanks und dem Fahrerhaus angeordnet ist.

Vorteilhaft sind die Antriebsräder als Riemenscheiben ausgebildet und mittels einer jeweils zugeordneten Riemenanordnung mit einem vom Antriebsmotor antreibbaren Umlenkorgan verbunden, wobei jede Riemenanordnung mittels einer jeweils zugeordneten Spanneinrichtung wahlweise spannbar bzw. zumindest bis auf eine Leerlaufspannung entlastbar ist und wobei jeweils nur die dem mit der Antriebswelle der Hochdruckpumpe gekuppelten Antriebsrad zugeordnete Riemenanordnung gespannt und die übrigen Riemenanordnungen entlastet werden. Diese Maßnahmen stellen sicher, dass nicht alle Riemenanordnungen gleichzeitig gespannt werden, sondern jeweils nur die Riemenanordnung, die Antriebskräfte überträgt. Jede weitere Riemenanordnung kann soweit entlastet sein, dass nur noch die Spur gehalten wird. Hierdurch wird die Biegebelastung der Antriebswelle in jedem Fall stark reduziert, wodurch die Sicherheit gegen Wellenbruch erhöht und damit ein sicherer Dauerbetrieb gewährleistet wird. Ein weiterer Vorteil der erfindungsgemäßen Maßnahmen ist darin zu sehen, dass Maßnahmen zur Bewerkstelligung einer Abstandsänderung zwischen treibender und getriebener Welle entbehrlich sind, was die Gesamtanordnung vereinfacht. Die Hochdruckpumpe kann daher im Gegensatz zu den bisherigen Anordnungen fix und unverschiebbar angeordnet sein.

Die erfindungsgemäß vorgesehene Möglichkeit zur individuellen Spannung bzw. Entlastung der einzelnen Riemenanordnungen ermöglicht in vorteilhafter Weise auch die Verwendung von Flachriemen, vorzugsweise inform von Zahnriemen. Dies gewährleistet in vorteilhafter Weise nicht nur eine zuverlässige, schlupflose Leistungsübertragung, sondern auch einen ruhigen Lauf.

Eine weitere zweckmäßige Maßnahme kann darin bestehen, dass der Mehrfachkupplungseinrichtung eine Schalteinrichtung zum Kuppeln des jeweils gewünschten Antriebsrads zugeordnet ist, mittels welcher auch die der Riemenanordnung des jeweils mit der Hochdruckpumpe gekuppelten Antriebsrads zugeordnete Spanneinrichtung aktivierbar ist. Hierbei ergibt sich in vorteilhafter Weise eine automatische Betätigung der Spanneinrichtung bei entsprechender Betätigung der Mehrfachkupplungseinrichtung. Eine der Riemenspanneinrichtung zugeordnete, eigene Steuereinrichtung ist dabei in vorteilhafter Weise entbehrlich.

Zweckmäßig kann die jeder Riemenanordnung zugeordnete Spanneinrichtung eine zugeordnete Spannrolle aufweisen, die auf einem zugeordneten Schwenkhebel aufgenommen ist, der mittels eines zugeordneten Stellorgans bewegbar ist Das Stellorgan kann dabei zweckmäßig als Pneumatikzylinder ausgebildet sein, der bezüglich der Beaufschlagung mit Druckluft zum zugeordneten Stellorgan der Mehrfachkupplungseinrichtung parallel geschaltet ist, was eine besonders einfache Bauweise gewährleistet.

Eine weitere, besonders zu bevorzugende Ausgestaltung der übergeordneten Maßnahmen kann darin bestehen, dass die Mehrfachkupplungseinrichtung eine mit der Antriebswelle der Hochdruckpumpe fluchtende, drehschlüssig hiermit verbundene Verlängerungsbüchse aufweist, auf der die Antriebsräder frei drehbar gelagert sind und die mit wenigstens einem zwischen zwei Antriebsrädern platzierten Flansch versehen ist, der mit voneinander abgewandten Ringkammem versehen ist, die jeweils einen alternativ mit einem Druckmittel beaufschlagbaren Druckraum enthalten, der von einem zugeordneten, axial verschiebbaren, drehschlüssig mit der Verlängerungsbüchse verbundenen Ringkolben verschlossen ist, wobei jeder Ringkolben mit einer dem jeweils benachbarten Antriebsrad zugeordneten Kupplungsfläche versehen und hiermit durch Druckbeaufschlagung bzw. Entlastung des zugeordneten Druckraums mit einer zugeordneten Kupplungsfläche des benachbarten Antriebsrads in und außer Kontakt bringbar ist Diese Maßnahmen ergeben in vorteilhafter Weise eine mittels eines Druckmittels betätigbare, als mechanische Kupplung ausgebildete, schaltbare Mehrfachkupplung, durch die die Antriebsräder alternativ aktivierbar bzw. passivierbar sind. Die genannten Maßnahmen ergeben daher eine besonders einfache, zuverlässig und sichere Bauweise.

Vorteilhaft kann zumindest ein Antriebsrad, vorzugsweise das größere Antriebsrad, als zum benachbarten Antriebsrad hin offene Trommel ausgebildet sein, in der der die Druckräume enthaltende Flansch platziert ist. Hierdurch lässt sich die Kompaktheit der Bauweise noch verstärken. Außerdem wird hierdurch die freie Biegelänge der Antriebswelle bzw. der hiermit verbundenen Verlängerungsbüchse soweit wie möglich begrenzt.

Eine weitere vorteilhafte Maßnahme kann darin bestehen, dass den Druckräumen ein in der Verlängerungsbüchse angeordnetes, stationäres Zylinderelement zugeordnet ist, das zwei axiale Eingänge und zwei mit jeweils mit einem Eingang kommunizierende, gegeneinander abgedichtete Umfangsnuten aufweist, mit denen zum jeweils zugeordneten Druckraum führende Radialbohrungen der Verlängerungsbüchse kommunizieren. Diese Maßnahmen ergeben in vorteilhafter Weise einen in die Verlängerungsbüchse integrierten Drehverteiler für das Druckmittel, was sich ebenfalls vorteilhaft auf die Kompaktheit der Bauweise auswirkt. Als Druckmittel kann zweckmäßig Luft Verwendung finden, was die Bauweise sehr vereinfacht, da dabei nur eine Zuleitung benötigt wird und auf eine Rückführleitung verzichtet werden kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Seitenansicht eines Kanalreinigungsfahrzeugs,
- Figur 2: eine Draufsicht auf den vorderen Bereich des Kanalreinigungsfahrzeugs gemäß Figur 1 mit teilweise entferntem Abfuhrbehälter
- Figur 3: einen Schnitt durch die der Hochdruckpumpe der Anordnung gemäß Figur 1 zugeordnete Doppelschaltkupplung und
- Figur 4: eine schematische Darstellung einer Doppelriemenspanneinrichtung mit zwei Spannorganen.

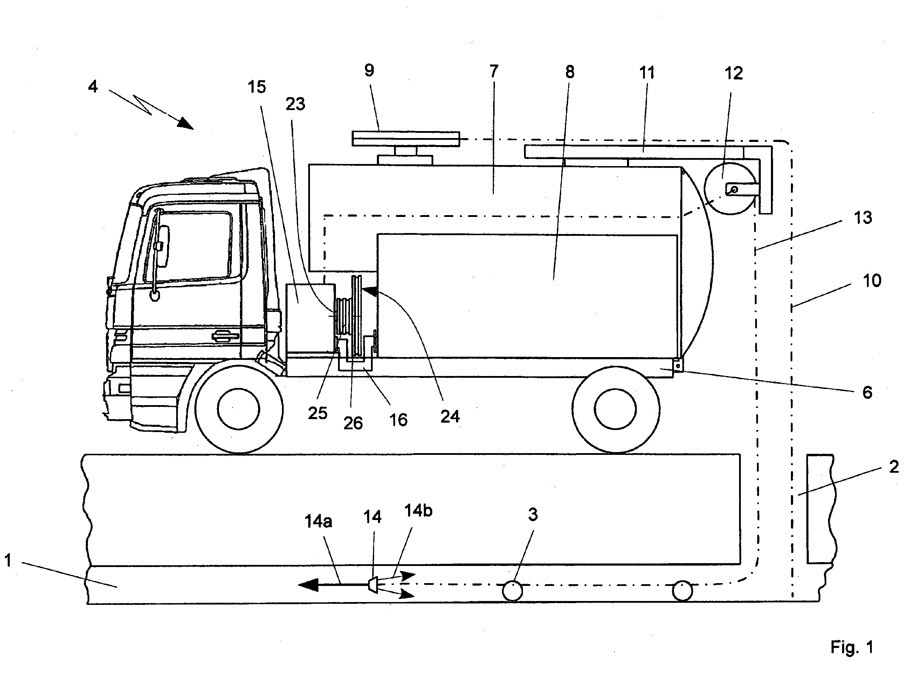

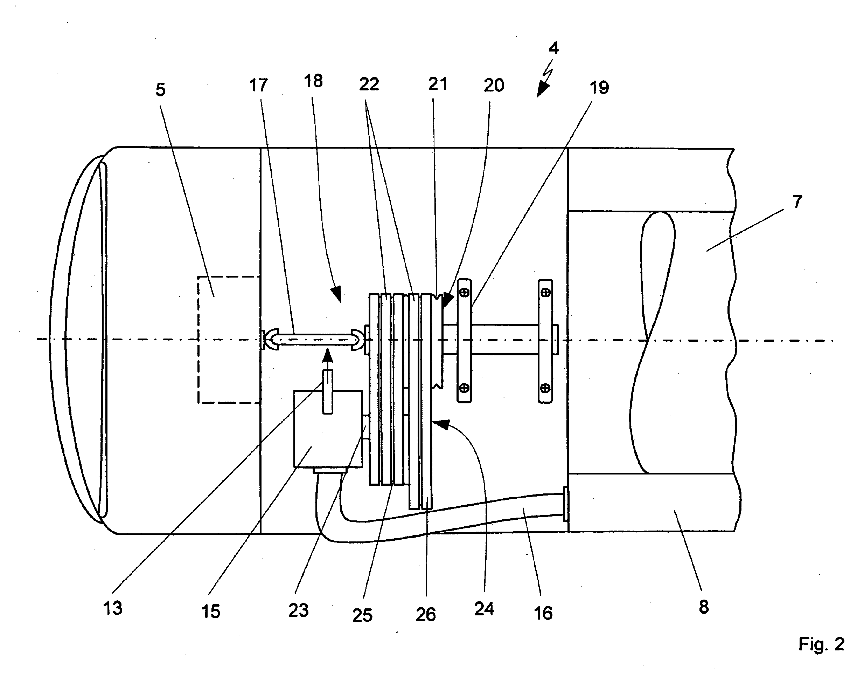

Aus der Figur 1 ergibt sich ein Kanal 1 mit einem nach oben geführten Schacht 2 und mehreren, einmündenden Hausanschlüssen 3 sowie ein Kanalreinigungsfahrzeug 4 zur Reinigung des Kanals 1. Das Kanalreinigungsfahrzeug 4 enthält eine fahrbare, mit einem in Figur 2 schematisch angedeuteten Fahrzeugmotor 5 versehene Chassis 6 und einen hierauf aufgenommenen Aufbau in Form einer Kanalreinigungsvorrichtung. Diese enthält einen fassförmigen Schlammabfuhrbehälter 7, der mit einem rückwärtigen Deckel versehen und zum Entleeren vorne hochschwenkbar auf der Chassis 6 angeordnet ist. Der Schlammabfuhrbehälter 7 ist in einer zugeordneten Mulde eines ihn untergreifenden und mit zwei ihn flanierenden Seitenkästen versehenen Spülwassertanks 8 angeordnet. Anstelle eines einteiligen Spülwassertanks könnten selbstverständlich auch zwei seitliche Spülwassertanks vorgesehen sein, die den fassförmigen Schlammabfuhrbehälter teilweise untergreifen und über Leitungen miteinander kommunizieren.

Auf dem Schlammabfuhrbehälter 7 ist eine liegende, um eine stehende Achse drehbare Haspel 9 angeordnet, die als Aufnahmevorrichtung für einen lediglich durch seine Mittellinie angedeuteten, an den Schlammabfuhrbehälter 7, der evakuierbar ist, angeschlossenen Saugschlauch 10 fungiert, Dieser ist über einen ebenfalls auf dem Schlammabfuhrbehälter 7 aufgenommenen bzw. hieran angebrachten, vorzugsweise teleskopierbaren und um eine senkrechte Achse schwenkbaren Ausleger 11 geführt. Zum Evakuieren des Schlammabführbehälters 7 dient eine hier nicht näher dargestellte, zweckmäßig mittels des Fahrzeugmotors 5 antreibbare Vakuumpumpe.

Der Aufbau der Chassis 6 enthält ferner eine hier am Ausleger 11 angebrachte Haspel 12 zur Aufnahme eines ebenfalls nur durch seine Mittellinie angedeuteten Spülschlauchs 13. Dieser ist am vorderen Ende mit einer Kanaldüse 14 bestückt und mittels einer auf der Chassis 6 aufgenommenen Hochdruckpumpe 15 mit unter hohem Druck stehendem Spülwasser versorgbar. Die Hochdruckpumpe 15 ist durch eine Saugleitung 16 mit dem Spülwassertank 8 verbunden. Dieser kann Frischwasser oder, sofern der Aufbau über eine Wasseraufbereitungseinrichtung verfügt, recycletes Kanalwasser enthalten.

Zur Reinigung des Kanals 1 wird der mit der Kanaldüse 14 versehene Spülschlauch 13 in den Kanal 1 eingeführt und mittels der Hochdruckpumpe 15 mit Spülwasser beaufschlagt. Gleichzeitig wird auch der Saugschlauch 10 in den Kanal abgesenkt und mit Saugzug beaufschlagt. Hierdurch werden die vom Spülwasser gelockerten und weggeschwemmten Verunreinigungen aufgesaugt und in den Schlammabfuhrbehälter 7 eingebracht.

Die Hochdruckpumpe 15 wird, wie die oben bereits erwähnte, dem Schlammabfuhrbehälter 7 zugeordnete Evakuierpumpe mittels des Fahrzeugmotors 5, der hier als interner Motor der gesamten Kanalreinigungsvorrichtung fungiert, angetrieben. Dies ist im dargestellten Beispiel durch eine in Figur 2 gezeigte, vom Motor 5 abgehende Zapfwelle 17 angedeutet, durch die hier ein der Hochdruckpumpe 15 zugeordnetes Riemen-Vorgelege 18 antreibbar ist. Dieses enthält eine mittels eines Lagerbocks 19 auf der Chassis 6 gelagerte Trommel 20, die hier mit mehreren Keilriemennuten 21 versehen ist. Von der Trommel 20 führen mehrere Keilriemen 22 zu einer auf der Antriebswelle 23 der Hochdruckpumpe 15 angeordneten, am besten aus Figur 1 ersichtlichen Riemenscheibenanordnung 24. Anstelle von Keilriemen können natürlich auch andere Antriebsmittel, beispielsweise Flachriemen, vorzugsweise in Form von Zahnriemen, vorgesehen sein. Selbstverständlich müssen dabei auch die treibenden und getriebenen Umlenkorgane inform der Trommel 20 und der Riemenscheibenanordnung 24 entsprechend angepasst sein.

Die Hochdruckpumpe 15 liegt, wie schon erwähnt, saugseitig am Spülwassertank 8 und ist druckseitig mit dem Spülschlauch 13 verbunden. Die Hochdruckpumpe 15 ist mit unterschiedlichen Geschwindigkeiten antreibbar. Hierdurch ist es möglich, den von der Kanaldüse 14 abgegebenen Strahl so zu dosieren, dass auch bei Kanälen mit vergleichsweise kleinem Querschnitt in diesen kein Unterdruck entsteht, der über die Hausanschlüsse 3 bis in die angeschlossenen Gebäude durchschlagen und die als Geruchssperre vorgesehenen Siphone leersaugen könnte. Die Kanaldüse 14 ist so ausgebildet, dass nach vorne und schräg nach hinten gestrahlt wird, wie durch die Strahlen 14a, 14b angedeutet ist. Der nach vorne gerichtete Strahl 14a fungiert als Peinigungsstrahl, durch den die im Kanal 1 vorhandenen Ablagerungen gelockert werden. Die schräg nach hinten gerichteten Strahlen 14b bewirken den Vortrieb der Kanalreinigungsdüse 4 und des Spülschlauchs 10 durch Rückstoßwirkung sowie einen Abtransport der gelockerten Ablagerungen.

Im dargestellten Beispiel ist die Hochdruckpumpe 15 mit zwei unterschiedlichen Geschwindigkeiten antreibbar, denen unterschiedliche Fördermengen zugeordnet sind. Dabei bleibt der erzeugte Wasserdruck gleich. Die höhere Geschwindigkeit wird bei der Reinigung von Kanälen mit vergleichsweise großem lichtem Querschnitt benutzt, die kleinere Geschwindigkeit bei der Reinigung von Kanälen mit vergleichsweise kleinem lichtem Querschnitt. Dementsprechend enthält die Riemenscheibenanordnung 24 im dargestellten Beispiel zwei als Riemenscheiben ausgebildete Antriebsräder 25, 26, deren Durchmesser unterschiedlich ist. Im Bereich der vorgeordneten Trommel 20 können ebenfalls unterschiedliche Durchmesser vorgesehen sein. Im dargestellten Beispiel besitzt die Trommel 20 auf ihrer ganzen Länge denselben Durchmesser. Das Verhältnis der Durchmesser der Antriebsräder 25, 26 kann im Bereich von 1:2 bis 1:3 liegen und vorzugsweise 1:2,5 betragen.

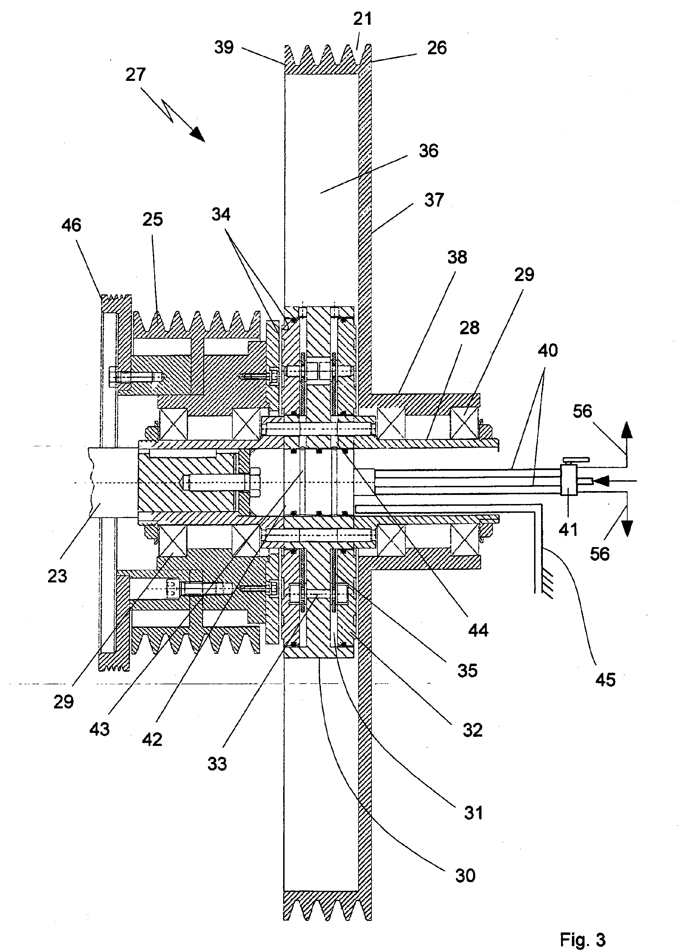

Das den kleineren Durchmesser aufweisende Antriebsrad 25 ist zweckmäßig breiter als das benachbarte, dem größeren Durchmesser zugeordnete Antriebsrad 26. Dementsprechend sind beim Ausführungsbeispiel gemäß Figuren 2, 3 dem Antriebsrad 25 im selben Verhältnis mehr Keilriemen 22 zugeordnet als dem benachbarten Antriebsrad 26. Bei der Verwendung von Flach- bzw. Zahnriemen können einfach unterschiedlich breite Riemen vorgesehen sein. Das Breitenverhältnis bzw. das Verhältnis der Keilriemenzahl liegt im Bereich von 4:1 bis 2:1 und beträgt vorzugsweise 3:2.

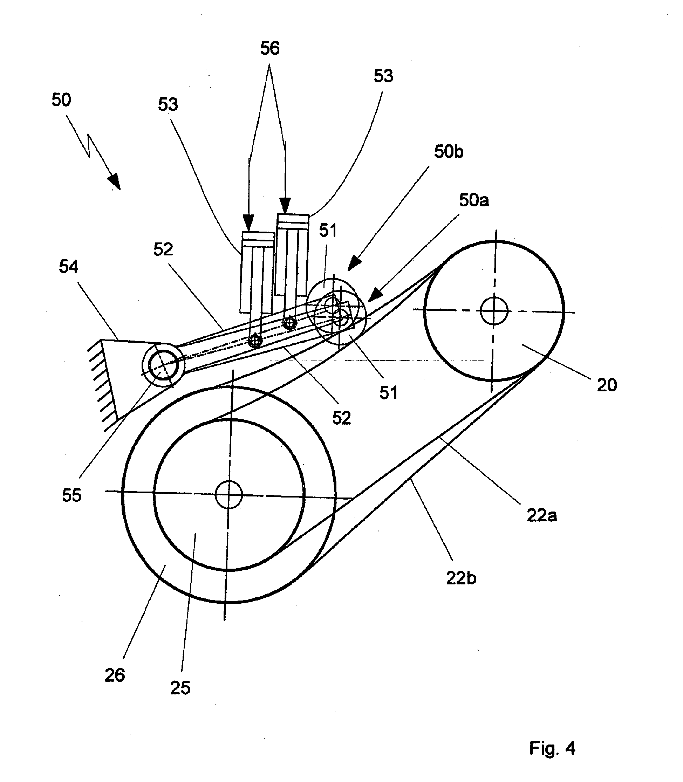

Die Antriebsräder 25, 26 der Riemenscheibenanordnung 24 sind frei drehbar gelagert und in ständiger Verbindung mit dem Motor 5, d.h. die Antriebsräder 25, 26 werden rotierend mitgenommen, solange der Motor 5 in Betrieb ist. Das der jeweils gewünschten Antriebsgeschwindigkeit der Hochdruckpumpe 15 zugeordnete Antriebsrad 25 bzw. 26 ist dabei mit der Antriebswelle 23 der Hochdruckpumpe 15 gekuppelt und umgekehrt. Sofern eine ausreichende Riemenspannung vorhanden ist, kann dabei die gewünschte Antriebsleistung übertragen werden. In einfachen Fällen werden alle Riemen des Riemenvorgeleges gleichzeitig gespannt. Hierzu wird der Achsabstand zwischen der Trommel 20 und der Antriebswelle 23 des Motors 5 verändert. Hierzu kann der Motor 5 verschiebbar angeordnet sein. Zweckmäßig sind den den Antriebsrädern 25, 26 zugeordneten Riemenanordnungen jedoch eigene Spanneinrichtungen zugeordnet, so dass die der gewünschten Antriebsgeschwindigkeit jeweils zugeordnete Riemenanordnung zwecks Leistungsübertragung stark gespannt und die andere Riemenanordnung entlastet werden kann bzw. nur so leicht gespannt werden kann, dass sie in der gewünschten Spur bleibt. Eine Leistungsübertragung ist dabei nicht erforderlich. Eine geeignete Mehrfach- bzw. Doppelriemenspanneinrichtung wird weiter unten anhand der Figur 4 näher erläutert.

Zur Kupplung der Antriebsräder 25, 26 ist die In Figur 3 gezeigte Doppelschaltkupplung 27 vorgesehen, durch welche die Antriebsräder 25,26 alternativ mit der Antriebswelle 23 kuppelbar sind. Die Doppelschaltkupplung 27 enthält eine mit der Antriebswelle 23 der Hochdruckpumpe 15 fluchtende und drehschlüssig hiermit verbundene, im dargestellten Beispiel hiermit verkeilte Verlängerungsbüchse 28, auf der die beiden Antriebsräder 25, 26 frei drehbar gelagert sind, wie durch Lager 29 angedeutet ist. Die Verlängerungsbüchse 28 ist mit einem zwischen den beiden Antriebsrädern 25, 26 platzierten, radialen Flansch 30 versehen, der mit durch umlaufende, seitliche Ausnehmungen gebildeten, voneinander abgewandten Ringkammem versehen ist. Diese enthalten jeweils einen alternativ mit einem Druckmittel beaufschlagbaren Druckraum 31, der durch einen jeweils zugeordneten, axial verschiebbaren Ringkolben 32 verschlossen ist.

Die Ringkolben 32 sind drehschlüssig mit der Verlängerungsbüchse 28 und hierüber mit der Antriebswelle 23 der Hochdruckpumpe 15 verbunden. Im dargestellten Beispiel sind hierzu die Ringkolben 32 und den Flansch 30 miteinander verbindende Mitnehmerstifte 33 vorgesehen. Zweckmäßig sind mehrere Mitnehmerstifte 33 am Umfang vorgesehen. Die Ringkolben 32 und das diesen jeweils benachbarte Antriebsrad 25 bzw. 26 sind miteinander zugewandten Kupplungsflächen 34 versehen, die durch einen Reibbelag gebildet werden können. Dementsprechend sind die Ringkolben 32 an ihren voneinander abgewandten Flächen und die Antriebsräder 25, 26 an ihren einander zugewandten Flächen mit jeweils einer Kupplungsfläche 34 versehen.

Durch Druckbeaufschlagung der einen oder anderen Druckkammer 31 ist der eine oder andere Ringkolben 32 mit seiner Kupplungsfläche 34 an die zugewandte Kupplungsfläche 34 des benachbarten Antriebsrads 25 bzw. 26 anstellbar, wodurch eine Mitnahme durch gegenseitigen Reibschluss erfolgt. Auf diese Weise wird die Antriebswelle 23 der Hochdruckpumpe 15 mit dem einen oder anderen Antriebsrad 20 bzw. 26 gekuppelt, was einen alternativen Antrieb der Hochdruckpumpe 15 mit der einen oder anderen Antriebsgeschwindigkeit von zwei unterschiedlichen Antriebsgeschwindigkeiten und dementsprechend eine entsprechende Anpassung der Förderleistung ermöglicht. Den Ringkolben 32 ist zweckmäßig eine Rückstelleinrichtung zugeordnet, die im Falle einer Druckentlastung des zugeordneten Druckraums 31 den zugeordneten Ringkolben 32 außer Kontakt mit dem benachbarten Antriebsrad 25 bzw. 26 bringt. Bei der Rückstelleinrichtung kann es sich um in den beiden Druckräumen 31 angeordnete, eine Zugkraft aufbringende Blattfederelemente 35 handeln. Zweckmäßig sind dabei mehrere derartiger Blattfederelemente 35 am Umfang vorgesehen.

Der die beiden Druckräume 31 enthaltende Ringflansch 30 der Verlängerungsbüchse 28 ist zweckmäßig in einem von einem der benachbarten Antriebsräder 25, 26, zweckmäßig vom größeren Antriebsrad 26 gebildeten Einbauraum 36 platziert. Hierzu ist das größere Antriebsrad 26 als einseitig offene Trommel ausgebildet, die eine radial verlaufende, ringförmige Stirnwand 37 aufweist, die mit ihrem inneren Umfang an eine vom jeweils benachbarten Antriebsrad 25 wegweisende, die zugeordneten Lager 29 umfassende Büchse 38 angesetzt ist und an deren äußeren Umfang ein mit Keilriemennuten 21 versehener Mantel 39 anschließt, der gegenläufig zur Büchse 38 verläuft und den Flansch 30 der Veriängerungsbüchse 28 übergreift, so dass sich eine kompakte Bauweise mit vergleichsweise geringer axialer Ausdehnung ergibt.

Als Druckmittel kann zweckmäßig Druckluft Verwendung finden, was eine Druckentlastung der Druckräume 31 ohne Rückführleitung ermöglicht. Jedem Druckraum 31 ist dabei eine Versorgungsleitung 40 zugeordnet, die wahlweise mit dem Druckmittel, hier Druckluft, beaufschlagbar ist. Hierzu ist eine den Versorgungsleitungen 40 zugeordnete Schalteinrichtung 41 vorgesehen, die zwei den Versorgungsleitungen 40 zugeordnete Ausgänge und einen an eine Druckmittelquelle anschließbaren Eingang aufweist und mittels der die eine oder andere Versorgungsleitung 40 mit der Druckmittelquelle verbindbar ist, wie durch einen Schalthebel angedeutet ist.

Die stationären Versorgungsleitungen 40 sind über einen Drehverteiler mit dem jeweils zugeordneten Druckraum 31 verbindbar. Hierzu ist in der Bohrung der Veriängerungsbüchse 28 ein radial innerhalb des Flansches angeordnetes Zylinderelement 42 vorgesehen, das zwei umlaufende, durch drei umlaufende Dichtringe gegeneinander und nach außen abgedichtete Umfangsnuten 43 aufweist, die jeweils über ein zylinderelementseitiges Bohrungssystem mit einer der Versorgungsleitungen 40 kommunizieren. Die Verlängerungsbüchse 28 enthält den Umfangsnuten 43 zugeordnete Radialbohrungen 44, die mit einem jeweils zugeordneten Druckraum 31 kommunizieren. Zweckmäßig können dabei mehrere Radialbohrungen 44 am Umfang vorgesehen sein. Das mit den stationären Versorgungsleitungen 40 verbundene Zylinderelement 43 ist gegen Drehung gesichert. Hierzu kann ein in Figur 3 angedeuteter Halter 45 vorgesehen sein. Vielfach können jedoch bereits die Versorgungsleitungen 40 als derartiger Halter fungieren.

Die oben bereits erwähnte, in Figur 4 dargestellte Mehrfach-Riemenspanneinrichtung 50 enthält für jede einem der Antriebsräder 25, 26 jeweils zugeordnete Riemenanordnung 22a, b z.B. jeweils inform mehrerer Keilriemen oder eines entsprechend breiten Flachriemens eine Spanneinrichtung 50a, b mit einem eigenen Spannorgan, hier inform einer über die Breite der zugeordneten Riemenanordnung 22a, b durchgehenden Spannrolle 51. Jede Spannrolle 51 ist auf einem zugeordneten, fahrzeugseitig schwenkbar gelagerten Schwenkhebel 52 drehbar gelagert, der mittels eines zugeordneten Stellorgans, hier inform eines Stellzylinders 53 bewegbar ist. Den Schwenkhebeln 52 der Mehrfach-Riemenspanneinrichtung 50 können eigene Lagerböcke zugeordnet sein. Im dargestellten Beispiel ist ein gemeinsamer Lagerbock 54 vorgesehen, auf dessen Achse 55 sämtliche, nebeneinander angeordnete Schwenkhebel 52 gelagert sein können. Die Stellzylinder 53 sind zweckmäßig als Pneumatikzylinder ausgebildet, die durch Druckluft betätigbar sind.

Die einerseits auf dem jeweils zugeordneten Antriebsrad 25 bzw. 26 und andererseits auf der permanent angetriebenen Trommel 20 aufgenommenen Riemenanordnungen 22a, b sind in jedem Fall so gespannt, dass sie spurtreu umlaufen, das heißt in ihrer Spur bleiben. Zur Übertragung von Antriebsieistung wird die Riemenspannung erhöht. Hierzu wird die betreffende Spannrolle 51 entsprechend angestellt. Sofern eine hohe Drehzahl der Hochdruckpumpe 15 benötigt wird, wird die Riemenanordnung 22a gespannt. Der zugeordnete Spannzylinder 53 wird dabei mit Druck, beispielsweise in der Höhe von 3,5 bar beaufschlagt. Der der benachbarten Riemenanordnung 22b zugeordnete Stellzylinder 53 ist dabei entlastet oder zweckmäßig nur mit einem geringeren Druck von etwa 0,5 bar beaufschlagt, so dass die betreffende Riemenanordnung 22b nur eine vergleichsweise geringe Leerlaufspannung erhält, die ausreicht, um die Spur zu halten.

Die Mehrfach-Riemenspanneinrichtung 50 und die Mehrfach-Kupplungseinrichtung 27 sind zweckmäßig so ausgebildet und miteinander verbunden, dass eine gemeinsame Aktivierung bzw. Passivierung der einander jeweils zugeordneten Organe möglich ist. Im dargestellten Beispiel sind die Stellzylinder 53 als Pneumatikzylinder ausgebildet, die bezüglich der Beaufschlagung mit Druckluft zu den Druckräumen 31 der Mehrfachkupplungseinrichtung 27 parallel geschaltet sind. Jeder Druckraum 31 ist dabei jeweils einem Stellzylinder 53 zugeordnet. Jeder Stellzylinder 53 ist über eine zugeordnete Versorgungsleitung 56 mit Druckluft beaufschlagbar. Die Versorgungsleitungen 56 können einfach als von den den Druckräumen 31 zugeordneten Versorgungsleitungen 40 abzweigende Abzweigleitungen ausgebildet sein. Im dargestellten Beispiel ist die den Versorgungsleitungen 40 zugeordnete Schalteinrichtung 41, wie aus Figur 3 hervorgeht, mit jeweils vier, paarweise parallel geschalteten Ausgängen versehen, wobei an die zu den den Druckleitungen 40 zugeordneten Ausgänge parallel geschalteten Ausgänge jeweils eine zu einem zugeordneten Stellzylinder 53 führende Versorgungsleitung 56 anschließt. Hierdurch wird erreicht, dass mittels der Schalteinrichtung 41 die Mehrfachkupplungseinrichtung 27 und die Mehrfach-Riemenspanneinrichtung 50 gleichzeitig geschaltet werden.

Der Fahrzeugmotor 5 kann in vorteilhafter Weise stets mit derselben, gewünschten Geschwindigkeit laufen und die Hochdruckpumpe 15 ist dennoch durch entsprechende Aktivierung des einen oder anderen Druckraums 31 sowie der parallel beaufschlagten Spanneinrichtung 50a, b mit unterschiedlichen Geschwindigkeiten antreibbar. Da die Geschwindigkeit des Fahrzeugmotors 5 nicht verändert wird, kann in vorteilhafter Weise auch der Antrieb von weiteren Aggregaten, beispielsweise einer der Hochdruckpumpe 15 zugeordneten, hier nicht näher dargestellten Niederdruckpumpe und/oder der oben bereits erwähnten Vakuumpumpe etc. von einem der Antriebsräder 25, 26 oder der Trommel 20 abgenommen werden. Im dargestellten Beispiel ist hierzu das kleinere Antriebsrad 25 mit einem angeflanschten Zusatzantriebsrad 46 versehen, das beispielsweise einer Niederdruckpumpe zugeordnet sein kann. Die Trommel 20 kann zusätzliche Mittel, hier in Form von Keilriemennuten 21 zum Antrieb einer Vakuumpumpe enthalten. Da die Geschwindigkeit des Motors 5 gleich bleibt, arbeiten auch diese Aggregate stets mit der vollen Leistung. Eine Veränderung der Geschwindigkeit des Motors 5 würde dagegen auch eine Veränderung der Leistung beispielsweise der Vakuumpumpe bewirken, was unerwünscht wäre.

## Patentansprüche

1. Vorrichtung zur Kanalreinigung, insbesondere Kanalreinigungsfahrzeug, mit einem internen Antriebsmotor (5) zum Antrieb diverser Aggregate und mit wenigstens einem in den Kanal (1) einführbaren, am vorderen Ende mit einer Kanaldüse (14) bestückten Räumschlauch (13), der mittels einer Hochdruckpumpe (15) mit Spülwasser versorgbar ist, deren Antriebswelle (23) zur Bewerkstelligung von Spülbetrieb mit dem internen Antriebsmotor (5) kuppelbar ist, wobei die Hochdruckpumpe (15) wahlweise mit verschiedenen Geschwindigkeiten antreibbar ist, **dadurch gekennzeichnet, dass** fluchtend zur Antriebswelle (23) der Hochdruckpumpe (15) mehrere, jeweils einer Antriebsgeschwindigkeit zugeordnete, frei drehbar gelagerte Antriebsräder (25,26) unterschiedlichen Durchmessers angeordnet sind, die in ständiger Mitnahmeverbindung mit dem internen Antriebsmotor (5) sind und mittels einer Mehrfachkupplungseinrichtung (27) wahlweise mit der Antriebswelle (23) der Hochdruckpumpe (15) kuppelbar sind.

2. Vorrichtung nach Anspruch 1, **dadurch gekennzeichnet, dass** die Antriebsräder (25,26) als Riemenscheiben ausgebildet und mittels einer jeweils zugeordneten Riemenanordnung (22a,b) mit einem vom Antriebsmotor (5) antreibbaren Riemenumlenkorgan verbunden sind, wobei jede Riemenanordnung (22a,b) mittels einer jeweils zugeordneten Spanneinrichtung (50a,b) wahlweise spannbar bzw. zumindest bis auf eine Leerlaufspannung entlastbar ist, wobei jeweils nur die dem mit der Antriebswelle (23) der Hochdruckpumpe (15) gekuppelten Antriebsrad (25 bzw. 26) zugeordnete Riemenanordnung (22a bzw. 22b) gespannt und die andere entlastet wird.

3. Vorrichtung nach Anspruch 1 oder 2, **dadurch gekennzeichnet, dass** die Hochdruckpumpe (15) wahlweise mit zwei unterschiedlichen Geschwindigkeiten antreibbar ist und dass zwei nebeneinander angeordnete Antriebsräder (25,26) mit unterschiedlichem Durchmesser und diesen zugeordnete, alternativ spannbare bzw. entlastbare Riemenanordnungen vorgesehen sind.

4. Vorrichtung nach Anspruch 3, **dadurch gekennzeichnet, dass** das Verhältnis der Durchmesser der Antriebsräder (25,26) im Bereich von 1:2 bis 1:3 liegt, vorzugsweise 1:2,5 beträgt und wobei das Antriebsrad (25) mit kleinerem Durchmesser breiter als das benachbarte Antriebsrad (26) mit größerem Durchmesser ist.

5. Vorrichtung nach einem der Ansprüche 2-4, **dadurch gekennzeichnet, dass** zur Bildung der Riemenanordnungen (22a,b) Flachriemen, vorzugsweise inform von Zahnriemen, vorgesehen sind.

6. Vorrichtung nach einem der vorhergehenden Ansprüche 2-5, **dadurch gekennzeichnet, dass** der Mehrfachkupplungseinrichtung (27) eine Schalteinrichtung (41) zum Kuppeln des jeweils gewünschten Antriebsrads (25,26) zugeordnet ist, mittels welcher auch die der Riemenanordnung (22a,b) des jeweils mit der Hochdruckpumpe (15) gekuppelten Antriebsrads (25,26) zugeordnete Spanneinrichtung (50a,b) aktivierbar ist.

7. Vorrichtung nach einem der Ansprüche 2- 6, **dadurch gekennzeichnet, dass** die Mehrfachkupplungseinrichtung (27) mit einem Druckmittel, vorzugsweise Druckluft, beaufschlagbare Druckräume (31) aufweist, die bezüglich der Beaufschlagung mit Druckluft parallel zu als Stellzylinder ausgebildeten Stellorganen (53) der Spanneinrichtungen (50a,b) geschaltet sind.

8. Vorrichtung nach einem der vorhergehenden Ansprüche 2-7, **dadurch gekennzeichnet, dass** jede Spanneinrichtung eine über die Breite der jeweils zugeordneten Riemenanordnung (22a,b) durchgehende Spannrolle (51) aufweist, die auf einem zugeordneten Schwenkhebel (52) aufgenommen ist, der mittels eines jeweils zugeordneten Stellorgans in Spannrichtung schwenkbar ist.

9. Vorrichtung nach einem der vorhergehenden Ansprüche, **dadurch gekennzeichnet, dass** die Mehrfachkupplungseinrichtung (27) eine mit der Antriebswelle (23) der Hochdruckpumpe (15) fluchtende, drehschlüssig hiermit verbundene Verlängerungsbüchse (28) aufweist, auf der die Antriebsräder (25,26) frei drehbar gelagert sind und die mit wenigstens einem zwischen zwei Antriebsrädern (25,26) platzierten Flansch (30) versehen ist, der mit voneinander angewandten Ringkammern versehen ist, die jeweils einen alternativ mit einem Druckmittel beaufschlagbaren Druckraum (31) enthalten, der von einem zugeordneten, axial verschiebbaren, drehschlüssig mit der Verlängerungsbüchse (28) verbundenen Ringkolben (32) verschlossen ist, wobei jeder Ringkolben (32) mit einer dem jeweils benachbarten Antriebsrad (25,26) zugeordneten Kupplungsfläche (34) versehen und hiermit durch Druckbeaufschlagung bzw. -entlastung des zugeordneten Druckraums (31) mit einer zugeordneten Kupplungsfläche (34) des benachbarten Antriebsrads (25,26) in und außer Kontrolle bringbar ist.

10. Vorrichtung nach Anspruch 9, **dadurch gekennzeichnet, dass** die Ringkolben (32) durch axiale Mitnehmerstifte (33) drehschlüssig mit dem Flansch (30) der Verlängerungsbüchse (28) verbunden und durch jeweils zugeordnete Rückstellfederelemente (35) am Flansch (30) der Verlängerungsbüchse (28) abgestützt sind.

11. Vorrichtung nach einem der Ansprüche 9 oder 10, **dadurch gekennzeichnet, dass** zumindest ein Antriebsrad, vorzugsweise das den größeren Durchmesser aufweisende Antriebsrad (26), als zum benachbarten Antriebsrad (25) hin offene Trommel ausgebildet ist, in welcher der die Druckräume (31) enthaltende Flansch (30) platziert ist.

12. Vorrichtung nach einem der Ansprüche 9 bis 11, **dadurch gekennzeichnet, dass** den Druckräumen (31) ein in der Bohrung der Verlängerungsbüchse angeordnetes, stationäres Zylinderelement (42) zugeordnet ist, das zwei axiale Eingänge und zwei mit jeweils einem Eingang kommunizierende, gegeneinander abgedichtete Umfangsnuten (43) aufweist, mit denen zum jeweils zugeordneten Druckraum (31) führende Radialbohrungen (44) der Verlängerungsbüchse (28) kommunizieren, wobei den Eingängen des Zylinderelements (42), das mittels eines aus der Verlängerungsbüchse (28) herausgeführten Halters (45) gegen Verdrehen fixiert ist, eine Schalteinrichtung (41) vorgeordnet ist, mittels welcher die Eingänge wahlweise mit einer Druckmittelquelle, vorzugsweise einer Druckluftquelle, verbindbar sind.

13. Vorrichtung nach einem der vorhergehenden Ansprüche, **dadurch gekennzeichnet, dass** an wenigstens einem der Antriebsräder, vorzugsweise am den kleineren Durchmesser aufweisenden Antriebsrad (25), ein Zusatzrad (46) zum Antrieb eines Peripherieorgans, vorzugsweise einer der Hochdruckpumpe (15) vorgeordneten Niederdruckpumpe, angebracht ist.

14. Vorrichtung nach einem vorhergehenden Ansprüche, **dadurch gekennzeichnet, dass** der interne Antriebsmotor (15) bei einem Kanalreinigungsfahrzeug der Fahrzeugmotor ist.

15. Vorrichtung nach einem der vorhergehenden Ansprüche, **dadurch gekennzeichnet, dass** einem in den Kanal (1) absenkbaren Saugschlauch (10) ein Schlammabfuhrbehälter (7) zugeordnet ist, der mittels einer Vakuumpumpe evakuierbar ist, die ebenfalls mittels des internen Antriebsmotors (5) antreibbar ist.

## Claims

1. An apparatus for cleaning sewers, especially a sewer cleaning vehicle, comprising an internal drive motor (5) for driving various units and at least one clearing hose (13) which comprises a duct nozzle (14) at the front end, which can be introduced into the sewer (1) and which can be supplied with scouring water by means of a high-pressure pump (15), whose drive shaft (23) can be coupled with the internal drive motor (5) for producing the scouring operation, wherein the high-pressure pump (15) can be driven selectively at different speeds, **characterized in that** several drive wheels (25, 26) of different diameter are arranged in alignment with the drive shaft (23) of the high pressure pump (15), which drive wheels are in alignment with the drive shaft (23) of the high-pressure pump (15), are respectively associated with a drive speed, are held in a freely rotatable manner and are in continuous entrainment connection with the internal drive motor (5) and can be coupled by means of a multiple coupling device (27) in a selective manner with the drive shaft (23) of the high-pressure pump (15).

2. An apparatus according to claim 1, **characterized in that** the drive wheels (25, 26) are arranged as pulleys, and are connected by means of a respectively associated belt arrangement (22a, b) with a belt deflection member that can be driven by the drive motor (5), wherein each belt arrangement (22a, b) can selectively be tensioned and relieved at least up to no-load tensioning by means of a respectively assigned tensioning device (50a, b), wherein only the belt arrangement (22a or 22b) is tensioned which is associated with the drive wheel (25 or 26) which is coupled with the drive shaft (23) of the high-pressure pump (15), and the other is relieved.

3. An apparatus according to claim 1 or 2, **characterized in that** the high-pressure pump (15) can selectively be driven at two difference speeds, and that two adjacently arranged drive wheels (25, 26) with different diameters and belt arrangements are provided which are associated therewith and can alternatively be tensioned or relieved.

4. An apparatus according to claim 3, **characterized in that** the ratio of the diameters of the drive wheels (25, 26) lies in the range of 1:2 to 1:3, preferably 1:2.5, and wherein the drive wheel (25) with the smaller diameter is wider than the adjacent drive wheel (26) with the larger diameter.

5. An apparatus according to one of the claims 2 to 4, **characterized in that** flat belts, preferably in form of toothed belts, are provided for forming the belt arrangements (22a, b).

6. An apparatus according to one of the claims 2 to 5, **characterized in that** the multiple coupling device (27) is associated with a switching device (41) for coupling the respectively desired drive wheel (25, 26), by means of which the tensioning device (50a, b) can also be activated which is associated with the belt arrangement (22a, b) of the drive wheel (25, 26) respectively coupled with the high-pressure pump (15).

7. An apparatus according to one of the claims 2 to 6, **characterized in that** the multiple coupling device (27) comprises pressure chambers (31) which can be supplied with a pressure medium, preferably compressed air, and which are switched with respect to the supply with compressed air in parallel to the actuating members (53) of the tensioning devices (50a, b) which are arranged as actuating cylinders.

8. An apparatus according to one of the claims 2 to 7, **characterized in that** each tensioning device comprises a tensioning roller (51) which continues over the width of the respectively associated belt arrangement (22a, b) and which is accommodated on an associated pivoting lever (52) which is pivotable in the tensioning direction by means of a respectively arranged actuating member.

9. An apparatus according to one of the preceding claims, **characterized in that** the multiple coupling device (27) comprises an extension bushing (28) which is in alignment with the drive shaft (23) of the high-pressure pump (15) and is connected in a rotationally engaged manner therewith, and on which the drive wheels (25, 26) are mounted in a freely rotatable manner, and which is provided with at least one flange (30) which is positioned between two drive wheels (25, 26) and which is provided with annular chambers which face away from one another and which respectively contain a pressure chamber (31) which can be supplied alternatively with a pressure medium and which is sealed by an associated annular piston that is axially displaceable and connected in a rotationally engaged manner with the extension bushing (28), wherein each annular piston (32) is provided with a coupling area (34) associated with a respectively adjacent drive wheel (25, 26) and can be brought into and out of control in this manner with an associated coupling area (34) of the adjacent drive wheel (25, 26) by pressurization or pressure relief of the associated pressure chamber (31).

10. An apparatus according to claim 9, **characterized in that** the annular pistons (32) are connected in a rotationally engaged manner by axial driver pins (33) with the flange (30) of the extension bushing (28), and are supported by respectively associated return spring elements (35) on the flange (30) of the extension bushing (28).

11. An apparatus according to one of the claims 9 or 10, **characterized in that** at least one drive wheel, preferably the drive wheel (26) having the larger diameter, is arranged as a drum which is open towards the adjacent drive wheel (25), in which the flange (30) containing the pressure chambers (31) is positioned.

12. An apparatus according to one of the claims 9 to 11, **characterized in that** a stationary cylinder element (42) which is arranged in the borehole of the extension bushing is associated with the pressure chambers (31), said cylinder element comprising two axial inputs and two mutually sealed circumferential grooves (43) which respectively communicate with one input and with which radial boreholes (44) of the extension bushing (28) communicate which lead to the respectively associated pressure chamber (31), wherein a switching device (41) is arranged upstream of the inputs of the cylinder element (42) which is fixed against twisting by means of a retainer (45) guided out of the extension bushing (28), by means of which switching device the inputs can selectively be connected with a pressure medium source, preferably a compressed air source.

13. An apparatus according to one of the preceding claims, **characterized in that** an additional wheel (46) for driving a peripheral member, preferably a low-pressure pump provided upstream of the high-pressure pump (15), is attached to at least one of the drive wheels, preferably a drive wheel (25) having the smaller diameter.

14. An apparatus according to one of the preceding claims, **characterized in that** the internal drive motor (15) is the vehicle motor in a sewer cleaning vehicle.

15. An apparatus according to one of the preceding claims, **characterized in that** a suction hose (10) that can be lowered into the sewer (1) is associated with a sludge removal container (7), which can be evacuated by means of a vacuum pump that can also be driven by means of the internal drive motor (5).

## Revendications

1. Dispositif pour le nettoyage de canalisations, en particulier véhicule pour le nettoyage de canalisations, avec un moteur d'entraînement interne (5) destiné à entraîner différents groupes et avec au moins un tuyau de curage (13) pouvant être introduit dans la canalisation (1) et équipé à l'extrémité antérieure d'une buse de canalisation (14), qui peut être alimenté en eau de rinçage au moyen d'une pompe à haute pression (15) dont l'arbre d'entraînement (23) peut être couplé avec le moteur d'entraînement interne (5) pour réaliser un rinçage, la pompe à haute pression (15) pouvant être entraînée au choix à différentes vitesses, **caractérisé en ce que** sont prévus dans l'alignement de l'arbre d'entraînement (23) de la pompe à haute pression (15) plusieurs roues d'entraînement (25, 26) supportées de façon à pouvoir tourner librement et associées chacune à une vitesse d'entraînement, qui sont constamment en liaison d'entraînement avec le moteur d'entraînement interne (5) et peuvent être couplées sélectivement au moyen d'un dispositif d'accouplement multiple (27) à l'arbre d'entraînement (23) de la pompe à haute pression (15).

2. Dispositif selon la revendication 1, **caractérisé en ce que** les roues d'entraînement (25, 26) sont conçues comme des poulies à courroie et sont reliées au moyen d'un dispositif de courroie (22a,b) associé à chacune avec un organe de renvoi de courroie pouvant être entraîné par le moteur d'entraînement (5), chaque dispositif de courroie (22a,b) pouvant être tendu sélectivement au moyen d'un dispositif tendeur (50a,b) associé à chacun ou détendu au moins jusqu'à une tension de marche à vide, le dispositif de courroie (22a ou 22b) associé à la roue d'entraînement (25 ou 26) accouplée à l'arbre d'entraînement (23) de la pompe à haute pression (15) étant seul mis en tension et l'autre étant détendu.

3. Dispositif selon la revendication 1 ou 2, **caractérisé en ce que** la pompe à haute pression (15) peut être entraînée sélectivement à deux vitesses différentes et il est prévu deux roues d'entraînement (25, 26) de diamètre différent disposées l'une à côté de l'autre et des dispositifs de courroie associés à celles-ci et pouvant être tendus et détendus en alternance.

4. Dispositif selon la revendication 3, **caractérisé en ce que** le rapport des roues d'entraînement (25, 26) est compris entre 1:2 et 1:3, de préférence est de 1:2,5, la roue d'entraînement (25) de plus petit diamètre étant plus large que la roue d'entraînement (26) de plus grand diamètre voisine.

5. Dispositif selon l'une des revendications 2 à 4, **caractérisé en ce que** des courroies plates, de préférence des courroies dentées, sont prévues pour former les dispositifs de courroie (22a,b).

6. Dispositif selon l'une des revendications 2 à 5, **caractérisé en ce que** le dispositif d'accouplement multiple (27) est associé à un dispositif de changement de rapport (41) destiné à accoupler la roue d'entraînement (25, 26) souhaitée, au moyen duquel le dispositif tendeur (50a,b) associé au dispositif de courroie (22a,b) de la roue d'entraînement (25, 26) accouplée à la pompe à haute pression (15) peut être activé.

7. Dispositif selon l'une des revendications 2 à 6, **caractérisé en ce que** le dispositif d'accouplement multiple (27) présente des compartiments de pression (31) pouvant être exposés à un moyen sous pression, de préférence de l'air comprimé, qui sont montés parallèlement à des organes de réglage (53) des dispositifs tendeurs (50a,b) conçus comme des cylindres de réglage par rapport à l'application de l'air comprimé.

8. Dispositif selon l'une des revendications 2 à 7, **caractérisé en ce que** chaque dispositif tendeur présente un rouleau tendeur (51) traversant sur la largeur du dispositif de courroie (22a,b) correspondant, qui est reçu sur un levier basculant (52) associé qui peut être déplacé en pivotement dans le sens de la mise en tension par un organe de réglage associé.

9. Dispositif selon l'une des revendications précédentes, **caractérisé en ce que** le dispositif d'accouplement multiple (27) présente une douille d'extension (28) alignée sur l'arbre d'entraînement (23) de la pompe à haute pression (15) et reliée à celui-ci de manière solidaire en rotation, sur laquelle les roues d'entraînement (25, 26) sont supportées avec possibilité de rotation libre et qui est munie d'au moins un flasque (30) placé entre deux roues d'entraînement (25, 26), lequel comporte des compartiments annulaires voisins les uns des autres contenant chacun un compartiment de pression (31) pouvant être exposé en alternance à un moyen sous pression, qui est fermé par un piston annulaire (32) associé mobile dans le sens axial et relié à la douille d'extension (28) de manière solidaire en rotation, chaque piston annulaire (32) étant muni d'une surface d'accouplement (34) associée à la roue d'entraînement (25, 26) voisine et pouvant ainsi être contrôlé et libéré du contrôle par l'application et l'arrêt de l'application de pression dans le compartiment de pression (31) correspondant avec une surface d'accouplement (34) associée de la roue d'entraînement (25, 26) correspondante.

10. Dispositif selon la revendication 9, **caractérisé en ce que** le piston annulaire (32) est relié de façon solidaire en rotation par des goupilles d'entraînement axiales (33) au flasque (30) de la douille d'extension (28) et s'appuie par des éléments de ressort de rappel (35) associés sur le flasque (30) de la douille d'extension (28).

11. Dispositif selon l'une des revendications 9 ou 10, **caractérisé en ce qu'**au moins une roue d'entraînement, de préférence la roue d'entraînement de plus grand diamètre (26), est conçue comme un tambour ouvert en direction de la roue d'entraînement voisine (25), dans lequel est placé le flasque (30) contenant les compartiments de pression (31).

12. Dispositif selon l'une des revendications 9 à 11, **caractérisé en ce que** les compartiments de pression (31) sont associés à un élément cylindrique stationnaire (42) disposé dans l'alésage de la douille d'extension, qui présente deux entrées axiales et deux gorges circonférentielles (43) isolées l'une de l'autre et communiquant chacune avec une entrée, avec lesquelles communiquent des alésages radiaux (44) de la douille d'extension (28) menant à l'espace de pression (31) correspondant, les entrées de l'élément cylindrique (42), qui est fixé pour empêcher sa rotation au moyen d'une fixation (45) sortant de la douille d'extension (28), étant précédées par un dispositif de changement de rapport (41) au moyen duquel elles peuvent être reliées sélectivement à une source de moyen sous pression, de préférence une source d'air comprimé.

13. Dispositif selon l'une des revendications précédentes, **caractérisé en ce qu'**il est prévu disposée sur au moins une des roues d'entraînement, de préférence sur la roue d'entraînement présentant le plus petit diamètre (25), une roue supplémentaire (46) pour l'entraînement d'un organe périphérique, de préférence une pompe à basse pression montée en amont de la pompe à haute pression (15).

14. Dispositif selon l'une des revendications précédentes, **caractérisé en ce que** le moteur d'entraînement interne (15) est le moteur du véhicule dans le cas d'un véhicule pour le nettoyage de canalisations.

15. Dispositif selon l'une des revendications précédentes, **caractérisé en ce qu'**un tuyau d'aspiration (10) pouvant être descendu dans la canalisation (1) est associé à un réservoir de débourbage (7) dans lequel le vide peut être créé au moyen d'une pompe à vide, qui peut également être entraînée au moyen du moteur d'entraînement interne (5).
